# EUROPEAN PATENT SPECIFICATION

(11) **EP 2 682 758 B1**
(45) Date of publication and mention of the grant of the patent: **21.03.2018**
(21) Application number: 12305808.3
(22) Date of filing: 05.07.2012
(51) Int. Cl.: G01P 3/44, G01P 3/487, G01D 5/245, F16C 41/00, F16C 19/06

(54) **Sensor unit and instrumented bearing comprising such a sensor unit**
Sensoreinheit und instrumentiertes Lager mit solch einer Sensoreinheit
Unité de capteur et roulement instrumenté comprenant une telle unité de détection

(43) Date of publication of application: 08.01.2014
(73) Proprietor: Aktiebolaget SKF, 415 50 Göteborg (SE)
(72) Inventor: Niarfeix, François, 37540 Saint Cyr Sur Loire (FR); Taillepied, Alexandre, 37370 St Paterne Racan (FR); Tersteeg, Pascal, 3436 ZP Nieuwegein (NL)
(74) Representative: Kuhstrebe, Jochen

(56) References cited:
- WO-A1-2012/080780
- US-A1- 2001 025 424
- US-A1- 2008 101 740
- US-B2- 7 481 583

## Description

### TECHNICAL FIELD OF THE INVENTION

The invention relates to a sensor unit for sensing the angular position of a rotatable element with respect to a fixed element. The invention also concerns an instrumented bearing comprising such a sensor unit.

### BACKGROUND OF THE INVENTION

Sensor units for sensing the angular position of a rotatable element often include induction sensors, for example known from US-B-5 309 094, involving a encoder element, adapted to generate magnetic field variations, and a sensing element adapted to determine, on the basis of the magnetic field variations, the angular position of the rotating element. The encoder element is generally a magnetic ring formed by several magnets having inverted polarities along the circumference of the ring. The sensing element is generally a transducer, which senses the intensity of a magnetic field in its vicinity. When the sensor unit is used nearby an electric motor, the magnetic interactions which exist in the electric motor can produce an interfering magnetic field which is sensed by the sensing element. This provokes sensing errors because the magnetic field variations generated by the encoder element are not accurately enough sensed by the sensing element.

To solve this issue, known solutions reduce the global magnetic field intensity sensed by the sensing element. This permits to have a reduced interfering magnetic field, but does not permit to obtain a satisfying sensing accuracy.

It is known from US-B-7 481 583, US-A-2001/0025424, US-A1-2008/101740 or WO-A-2012/080780 to mount the sensing element in a shielding casing.

### SUMMARY OF THE INVENTION

The aim of the invention is to provide a new sensor unit for sensing the angular position of a rotating element with respect to a fixed element, which improves the accuracy of the sensor when it operates in an interfering magnetic field.

To this end, the invention concerns a sensor unit for sensing the angular position of a rotatable element with respect to a fixed element, comprising an encoder element, which comprises a metallic frame, which is fast with the rotating element_and adapted to generate magnetic field variation as a function of its angular position, and a sensing element fast with the fixed element, adapted to sense the magnetic field variations, the sensing element being supported by a sensor body with a rotational axis and mounted in a shielding casing fast with the fixed element. The shielding casing comprises an inner cylindrical wall, a radial bottom wall perpendicular to a rotation axis of the rotatable element and an outer cylindrical wall, so that the inner cylindrical wall and the outer cylindrical wall are centered on and parallel to the rotation axis. The shielding casing further comprises at least two flux concentrators formed by tabs and adapted to deflect away from the sensing element an interfering magnetic field in which the sensor unit operates. This sensor unit is characterized in that the metallic frame of the encoder element defines with the flux and the shielding casing a preferred magnetic path surrounding the sensing element in a radial sectional plane with respect to the rotational axis of the sensor body, said flux concentrators extending in a plane substantially parallel to a radial bottom wall of the shielding casing, on the other side of the sensing element with respect to said bottom wall, and on both sides of the sensing element along the circumferential direction of the shielding casing.

Thanks to the invention, the interfering magnetic field which can be produced by a closely located electrical motor is deflected away from the sensing element. In other words, the magnetic field sensed by the sensing element is substantially solely formed by the magnetic field variations generated by the rotation of the encoder element. Therefore, these magnetic intensity variations can be accurately detected and the accuracy of the sensor is improved.

According to further aspects of the invention which are advantageous but not compulsory, such a sensor unit may incorporate one or several of the following features:
- The flux concentrators extend, in a radial direction with respect to a central axis of the sensor body, in the vicinity of the encoder element.
- The flux concentrators extend in a radial direction from an outer wall of the shielding casing and towards a central axis of the sensor body.
- The flux concentrators are in one piece with the shielding casing.
- The flux concentrators have a recess adapted to receive an edge of a ring of a bearing.
- The flux concentrators and the shielding casing are made from the same material, from ferritic steel with high magnetic permeability properties such as AISI 430.

The invention also concerns an instrumented bearing comprising a bearing including a fixed ring and a rotating ring, and a sensor unit as mentioned here-above, whereas the encoder element is fast with the rotating ring and the sensing element is fixed to the fixed ring.

According to an advantageous aspect, the bearing is of the rolling type and comprises rolling elements located between the fixed ring and the rotating ring.

### BRIEF DESCRIPTION OF THE DRAWINGS

The invention will now be explained in correspondence with the annexed figures, as an illustrative example. In the annexed figures:

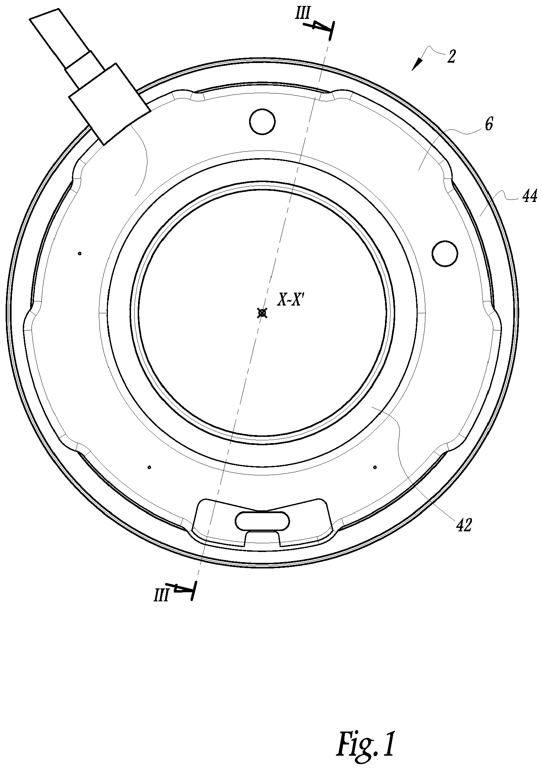

- Figure 1 is a front view of an instrumented bearing according to the invention;

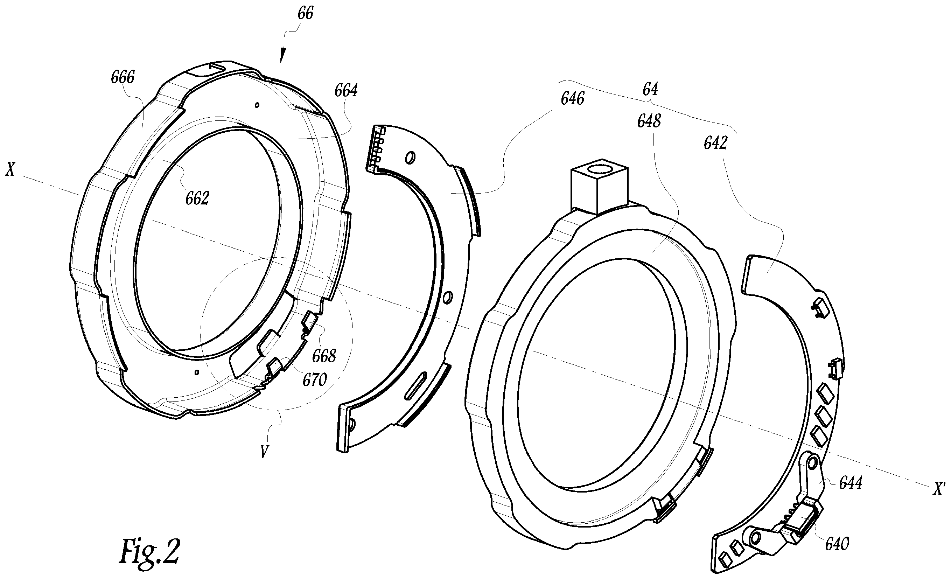

- Figure 2 is an exploded perspective view of a sensor body and a shielding casing of the instrumented bearing of figure 1;
- Figure 3 is a sectional view along line III-III, of the instrumented bearing of figure 1;
- Figure 4 is a view, at a larger scale, of detail IV on figure 3;
- Figure 5 is a view, at a larger scale, of detail V on figure 2.

### DETAILED DESCRIPTION OF SOME EMBODIMENTS

The instrumented bearing 2 represented on the figures comprises a rolling bearing 4 including a rotating inner ring 42 and a fixed outer ring 44. Between inner ring 42 and outer ring 44 are located balls 45 mounted in a cage 46. In a non-shown alternate embodiment, rolling bearing 4 may comprise other types of rolling element, such as rollers or needles.

Inner ring 42 is rotatable with respect to outer ring 44 around a central rotation axis X-X' of rolling bearing 4.

Instrumented bearing 2 also comprises a sensor unit 6. Sensor unit 6 comprises an encoder element 62, fast with inner ring 42 and adapted to generate magnetic field variations as a function of its angular position. Encoder element 62 comprises a frame 621 and a magnetic ring 623. Magnetic ring 623 is fixed to frame 621, which is fast in rotation with inner ring 42.

Sensor unit 6 further comprises a sensor body 64, which is mounted in a shielding casing or yoke 66 fixed to outer ring 44. Sensor body 64 is centred on a central axis corresponding to axis X-X'. Sensor body 64 comprises a sensing element 640. Sensing element 640 is a transducer adapted to sense the magnetic field variations generated by the rotation of the magnetic ring 623 around axis X-X'. Sensing element 640 is mounted on and connected to a printed circuit board or PCB 642 thanks to a support member 644. PCB 642 is mounted in shielding casing 66. Shielding casing 66 is an annular shaped metallic part centred on axis X-X' and which comprises an inner cylindrical wall 662, a radial bottom wall 664 perpendicular to axis X-X' and an outer cylindrical wall 666. Walls 662 and 666 are centred on and parallel to axis X-X'. Shielding casing 66 is made of steel having a high magnetic permeability.

PCB 642 has a half-annular shape corresponding with the shape of shielding casing 66 and is mounted against bottom wall 664. As an optional feature, sensor body 64 may comprise a support plate 646, in which PCB 642 is mounted, support plate 646 being mounted against bottom wall 664 of shielding casing 66. Sensing element 640, support body 644, PCB 642 and support plate 646 are over moulded in a layer 648 of plastic material injected in shielding casing 66.

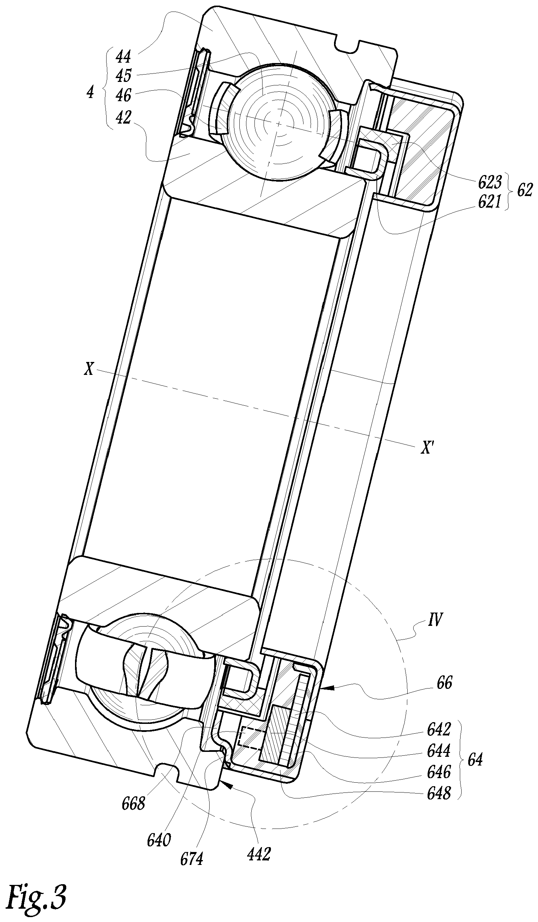

Sensing element 640 has a substantially parallelepiped shape extending parallel to axis X-X' and faces magnetic ring 623 along a radial direction. Sensing element 640 is represented in ghost lines on figures 3, 4 and 5. In order to prevent sensing element 640 from being affected by interfering magnetic fields that may be provoked by a non-represented closely located electric motor, shielding casing 66 comprises, in the vicinity of sensing element 640, two fixed flux concentrators 668 and 670, which deflect any interfering magnetic field away from sensing element 640. Advantageously, flux concentrators 668 and 670 and shielding casing 66 are made from the same material, preferably from ferritic steel with high magnetic permeability properties such as AISI 430.

More precisely, flux concentrators 668 and 670 are tabs which extend in a plane substantially parallel to bottom wall 664, on the other side of sensing element 640 with respect to bottom wall 664. Tabs 668 and 670 extend on both sides of sensing element 640 along the circumferential direction of shielding casing 66. Tabs 668 and 670 extend in a purely radial direction from outer wall 666 to rotation axis X-X'.

Tabs 668 and 670 are made in the same piece of steel as the rest of shielding casing 66. In other words, they are integral with walls 662, 664 and 666.

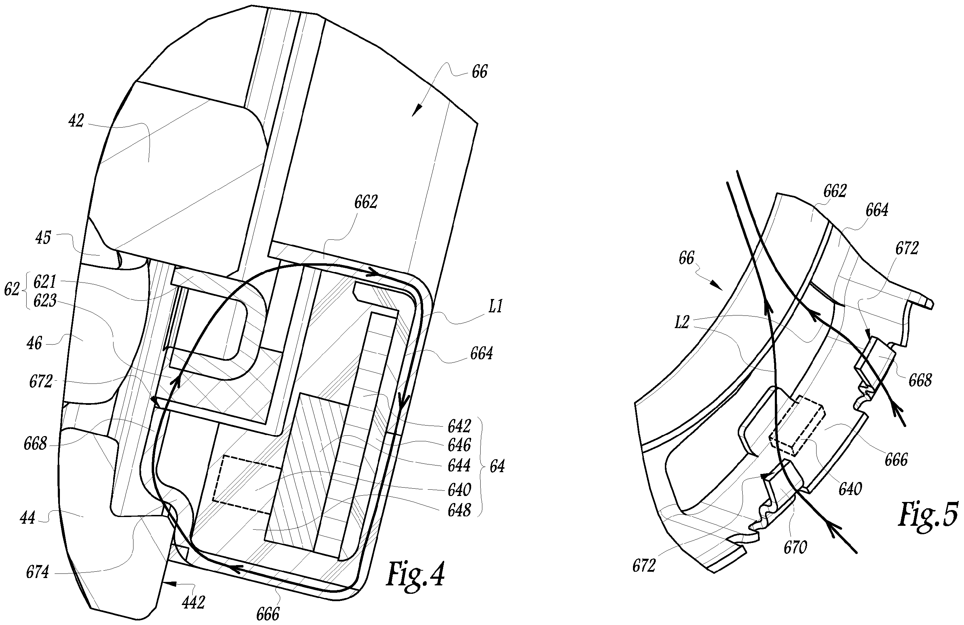

As represented on figures 3 and 4, when instrumented bearing 2 is viewed in a radial sectional plane, frame 621, walls 662, 664 and 666 and tabs 668 and 670 define a substantially circular magnetic path represented by line L1, which surrounds sensing element 640 creating a Faraday cage and deflecting interfering magnetic field lines. Interfering magnetic fields follow lines L1 and are deflected away from sensing element 640.

Tabs 668 and 670 extend radially in the vicinity of magnetic ring 623, the inner edge 672 of tabs 668 and 670 being aligned with sensing element 640, along a direction parallel to axis X-X'.

As flux concentrating tabs 668 and 670 are located on both sides of sensing element 640 along the circumferential direction of shielding casing 66, they create a radially oriented magnetic path, represented by lines L2 on figure 5, passing on both sides of element 640. This permits to deflect interfering magnetic fields following lines L2 away from sensing element 640, in a plane perpendicular to rotation axis X-X'.

Thus, the structure and position of tabs 668 and 670 permits to create a Faraday cage in two dimensions around sensing element 640.

Flux concentrating tabs 668 and 670 each have an inwards bent shape, forming a recess 674 which extends towards the inner side of shielding casing 66. Recess 674 permits to receive, on the outer side of shielding casing 66, an axial edge 442 of outer ring 44, avoiding mounting issues.

According to a non-shown alternate embodiment, flux concentrating tabs 668 and 670 may be independently produced parts fixed to shielding casing 66 by any convenient means.

According to a further non-shown alternate embodiment, shielding casing 66 may comprise more than two flux concentrating tabs, for example three.

According to a non-shown alternative which does not constitute an embodiment of the invention, shielding casing 66 may comprise only one flux concentrating tab, for instance either the flux concentrating tab 668 or the flux concentrating tab 670.

## Claims

1. A sensor unit (6) for sensing the angular position of a rotatable element (42) with respect to a fixed element (44), comprising an encoder element (62) which comprises a metallic frame (621),is fast with the rotatable element (42), and adapted to generate magnetic field variations as a function of its angular position, and a sensing element (640) fast with the fixed element (44), adapted to sense the magnetic field variations, the sensing element (640) being supported by a sensor body (64) with a rotational axis and mounted in a metallic shielding casing (66) fast with the fixed element (44), the shielding casing (66) comprising an inner cylindrical wall (662), a radial bottom wall (664) perpendicular to a rotation axis (X-X') of the rotatable element (42) and an outer cylindrical wall (666), the walls (662) and (666) being centered on and parallel to the rotation axis (X-X'), the shielding casing (66) further comprising at least two flux concentrators (668, 670) formed by tabs and adapted to deflect away from the sensing element (640) an interfering magnetic field (L1, L2) in which the sensor unit (6) operates,
wherein the metallic frame (621) of the encoder element (62) defines with the flux concentrators (668, 670) and the shielding casing (66) a preferred magnetic path (L1) surrounding the sensing element (640) in a radial sectional plane with respect to the rotational axis of the sensor body (64),
and wherein said flux concentrators (668, 670) extend in a plane substantially parallel to the radial bottom wall (664) of the shielding casing (66), on the other side of the sensing element (640) with respect to said bottom wall (664), and on both sides of the sensing element (640) along the circumferential direction of the shielding casing (66).

2. Sensor unit according to claim 1, wherein the flux concentrators (668, 670) extend, in a radial direction with respect to a central axis (X-X') of the sensor body (64), in the vicinity of the encoder element (62).

3. Sensor unit according to any preceding claim, wherein the flux concentrators (668,670) extend in a radial direction from an outer wall (666) of the shielding casing (66) and towards a central axis (X-X') of the sensor body (64).

4. Sensor unit according to any preceding claim, wherein the flux concentrators (668, 670) are in one piece with the shielding casing (66).

5. Sensor unit according to any preceding claim, wherein the flux concentrators (668, 670) have a recess (674) adapted to receive an edge (442) of a ring (44) of a bearing (4).

6. Sensor unit according to any preceding claim, wherein the flux concentrators (668, 670) and the shielding casing (66) are made from the same material.

7. Sensor unit according to claim 6, wherein the flux concentrators (668, 670) and the shielding casing (66) are made from ferritic steel with high magnetic permeability properties such as AISI 430.

8. Instrumented bearing (2) comprising a bearing (4) including a fixed ring (44) and a rotating ring (42), and a sensor unit (6) according to one of the previous claims, wherein the encoder element (62) is fast with the rotating ring (42) and the sensing element (640) is fixed to the fixed ring (44).

9. Instrumented bearing according to claim 8, wherein the bearing (4) is of the rolling type and comprises rolling elements (45) located between the fixed ring (44) and the rotating ring (42).

## Patentansprüche

1. Sensoreinheit (6) zum Erkennen der Winkelposition eines drehbaren Elements (42) in Bezug auf ein feststehendes Element (44), umfassend ein Codiererelement (62), das einen Metallrahmen (621) umfasst und an dem drehbaren Element (42) befestigt und dafür ausgelegt ist, Magnetfeldänderungen in Abhängigkeit von seiner Winkelposition zu erzeugen, und ein Sensorelement (640), das an dem feststehenden Element (44) befestigt ist und ausgelegt ist zum Erkennen der Magnetfeldänderungen, wobei das Sensorelement (640) von einem Sensorkörper (64) mit einer Drehachse getragen wird und in ein Metallabschirmgehäuse (66) montiert ist, das an dem feststehenden Element (44) befestigt ist, wobei das Abschirmgehäuse (66) eine innere zylinderförmige Wand (662), eine radiale untere Wand (664) senkrecht zu einer Drehachse (X-X') des drehbaren Elements (42) und eine äußere zylinderförmige Wand (666) umfasst, wobei die Wände (662) und (666) an der Drehachse (X-X') zentriert und zu ihr parallel sind, wobei das Abschirmgehäuse (66) ferner wenigstens zwei Flusskonzentratoren (668, 670) umfasst, die durch Laschen gebildet werden und dafür ausgelegt sind, vom Sensorelement (640) ein störendes Magnetfeld (L1, L2) weg zu leiten, in dem die Sensoreinheit (6) arbeitet, wobei der Metallrahmen (621) des Codiererelements (62) zusammen mit den Flusskonzentratoren (668, 670) und dem Abschirmgehäuse (66) einen bevorzugten Magnetpfad (L1) definiert, der das Sensorelement (640) in einer radialen Schnittebene bezogen auf die Drehachse des Sensorkörpers (64) umgibt,
und wobei die Flusskonzentratoren (668, 670) sich in einer Ebene im Wesentlichen parallel zur radialen unteren Wand (664) des Abschirmgehäuses (66), auf der anderen Seite des Sensorelements (640) bezogen auf die untere Wand (664), und auf beiden Seiten des Sensorelements (640) entlang der Umfangsrichtung des Abschirmgehäuses (66) erstrecken.

2. Sensoreinheit gemäß Anspruch 1, wobei sich die Flusskonzentratoren (668, 670) in einer radialen Richtung bezogen auf eine Mittelachse (X-X') des Sensorkörpers (64) in der Nachbarschaft des Codiererelements (62) erstrecken.

3. Sensoreinheit gemäß einem der vorstehenden Ansprüche, wobei sich die Flusskonzentratoren (668, 670) in einer radialen Richtung von einer äußeren Wand (666) des Abschirmgehäuses (66) und zu einer Mittelachse (X-X') des Sensorkörpers (64) erstrecken.

4. Sensoreinheit gemäß einem der vorstehenden Ansprüche, wobei die Flusskonzentratoren (668, 670) in einem Stück mit dem Abschirmgehäuse (66) ausgebildet sind.

5. Sensoreinheit gemäß einem der vorstehenden Ansprüche, wobei die Flusskonzentratoren (668, 670) eine Aussparung (674) aufweisen, die dafür ausgelegt ist, einen Rand (442) eines Rings (44) eines Lagers (4) aufzunehmen.

6. Sensoreinheit gemäß einem der vorstehenden Ansprüche, wobei die Flusskonzentratoren (668, 670) und das Abschirmgehäuse (66) aus demselben Material gefertigt sind.

7. Sensoreinheit gemäß Anspruch 6, wobei die Flusskonzentratoren (668, 670) und das Abschirmgehäuse (66) aus Ferritstahl mit hoher magnetischer Durchlässigkeit gefertigt sind, etwa AISI 430.

8. Instrumentiertes Lager (2), umfassend ein Lager (4), das einen feststehenden Ring (44) und einen drehbaren Ring (42) aufweist, und eine Sensoreinheit (6) gemäß einem der vorstehenden Ansprüche, wobei das Codiererelement (62) an dem drehbaren Ring (42) befestigt ist und das Sensorelement (640) an dem feststehenden Ring (44) befestigt ist.

9. Instrumentiertes Lager gemäß Anspruch 8, wobei das Lager (4) vom Typ Wälzlager ist und Rollelemente (45) umfasst, die zwischen dem feststehenden Ring (44) und dem drehbaren Ring (42) angeordnet sind.

## Revendications

1. Unité (6) de capteur servant à détecter la position angulaire d'un élément pivotant (42) par rapport à un élément fixe (44), comportant un élément codeur (62) qui comporte une ossature métallique (621), est solidaire de l'élément pivotant (42), et prévu pour générer des variations de champ magnétique en fonction de sa position angulaire, et un élément (640) de détection solidaire de l'élément fixe (44), prévu pour détecter les variations de champ magnétique, l'élément (640) de détection étant porté par un corps (64) de capteur doté d'un axe de rotation et monté dans une enveloppe métallique (66) de protection solidaire de l'élément fixe (44), l'enveloppe (66) de protection comportant une paroi cylindrique intérieure (662), une paroi radiale (664) de fond perpendiculaire à un axe de rotation (X-X') de l'élément pivotant (42) et une paroi extérieure cylindrique (666), les parois (662) et (666) étant centrées sur et parallèles à l'axe de rotation (X-X'), l'enveloppe (66) de protection comportant en outre au moins deux concentrateurs (668, 670) de flux formés par des languettes et prévus pour dévier à l'écart de l'élément (640) de détection un champ magnétique brouilleur (L1, L2) dans lequel fonctionne l'unité (6) de capteur,
l'ossature métallique (621) de l'élément codeur (62) définissant avec les concentrateurs (668, 670) de flux et l'enveloppe (66) de protection un chemin magnétique préféré (L1) entourant l'élément (640) de détection dans un plan de coupe radial par rapport à l'axe de rotation du corps (64) de capteur,
et lesdits concentrateurs (668, 670) de flux s'étendant dans un plan sensiblement parallèle à la paroi radiale (664) de fond de l'enveloppe (66) de protection, de l'autre côté de l'élément (640) de détection par rapport à ladite paroi (664) de fond, et des deux côtés de l'élément (640) de détection suivant la direction circonférentielle de l'enveloppe (66) de protection.

2. Unité de capteur selon la revendication 1, les concentrateurs (668, 670) de flux s'étendant, dans une direction radiale par rapport à un axe central (X-X') du corps (64) de capteur, au voisinage de l'élément codeur (62).

3. Unité de capteur selon l'une quelconque des revendications précédentes, les concentrateurs (668, 670) de flux s'étendant dans une direction radiale à partir d'une paroi extérieure (666) de l'enveloppe (66) de protection et vers un axe central (X-X') du corps (64) de capteur.

4. Unité de capteur selon l'une quelconque des revendications précédentes, les concentrateurs (668, 670) de flux étant d'un seul tenant avec l'enveloppe (66) de protection.

5. Unité de capteur selon l'une quelconque des revendications précédentes, les concentrateurs (668, 670) de flux présentant un évidement (674) prévu pour recevoir un bord (442) d'une bague (44) d'un palier (4).

6. Unité de capteur selon l'une quelconque des revendications précédentes, les concentrateurs (668, 670) de flux et l'enveloppe (66) de protection étant constitués du même matériau.

7. Unité de capteur selon la revendication 6, les concentrateurs (668, 670) de flux et l'enveloppe (66) de protection étant constitués d'un acier ferritique doté de propriétés de perméabilité magnétique élevée, comme l'AISI 430.

8. Palier instrumenté (2) comportant un palier (4) comprenant une bague fixe (44) et une bague tournante (42), et une unité (6) de capteur selon l'une des revendications précédentes, l'élément codeur (62) étant solidaire de la bague tournante (42) et l'élément (640) de détection étant fixé à la bague fixe (44).

9. Palier instrumenté selon la revendication 8, le palier (4) étant du type à roulement et comportant des éléments (45) de roulement situés entre la bague fixe (44) et la bague tournante (42).
